# EUROPÄISCHE PATENTANMELDUNG

(11) **EP 1 731 756 A2**
(43) Veröffentlichungstag der Anmeldung: **13.12.2006**
(21) Anmeldenummer: 06010982.4
(22) Anmeldetag: 29.05.2006
(51) Int. Cl.: F03B 9/00

(54) **Wasserkraftanlage**

(30) Priorität: 27.05.2005 DE 202005008463 U
(71) Anmelder: Max-Tec Wasserkraft AG, 50999 Koeln (DE)
(72) Erfinder: Blomeier, Maximilian Hermann, 50674 Köln (DE)
(74) Vertreter: Grünecker, Kinkeldey, Stockmair & Schwanhäusser Anwaltssozietät

(57) **Zusammenfassung**

Die vorliegende Erfindung betrifft eine Wasserkraftanlage zur Gewinnung von elektrischer Energie umfassend einen vertikalen Schacht (10) aufweisende Wasserkrafteinheit (1) und einen mit der Wasserkrafteinheit (1) verbundenen Generator (8). Es ist eine Aufgabe der vorliegenden Erfindung eine Wasserkraftanlage vorzuschlagen, welche auch bei Schwankungen der Wasserkraftanlage zugeführten Wassermenge eine Gewinnung von Energie bei hohem Wirkungsgrad ermöglicht. Zur Lösung dieser Aufgabe wird mit der vorliegenden Erfindung eine Wasserkraftanlage vorgeschlagen, die dadurch gekennzeichnet ist, dass der Schacht (10) mehrere Wassereinlassöffnungen (16, 18) aufweist und dass der Generator (8) ein leistungsvariabler Generator ist (Fig. 1).

## Beschreibung

Die vorliegende Erfindung betrifft eine Wasserkraftanlage zur Gewinnung von elektrischer Energie, welche eine einen vertikalen Schacht aufweisende Wasserkrafteinheit und einen mit der Wasserkrafteinheit verbundenen Generator umfasst.

Insbesondere betrifft die vorliegende Erfindung Wasserkraftanlagen, die als eine kompakte Einheit aufgebaut sind. D.h. die Wasserkraftanlage kann ohne große Baumaßnahmen direkt an einen für sie vorgesehenen Einsatzort eingesetzt werden. Somit ist ein mobiler Einsatz der erfindungsgemäßen Wasserkraftanlage möglich, d.h. die Wasserkraftanlage kann zwischen unterschiedlichen Einsatzorten kostengünstig und ohne größeren Aufwand transportiert werden. Die Wasserkraftanlage gemäß der Erfindung ist somit eine Art mobile Wasserkraftanlage.

Eine gattungsgemäße Wasserkraftanlage ist aus der DE 299 12 835 U1 bekannt. Diese Vorrichtung weist zwei umlaufende Ketten auf, die jeweils über zwei übereinander angeordneten Umlenkrollen umlaufend geführt sind. An den Ketten sind beabstandet voneinander jeweils so genannte Prallbleche angeordnet. Die Prallbleche dienen als Widerstand für das den Schacht durchlaufende Wasser. D.h. eine in Umlaufrichtung auf die Prallbleche aufgebrachte Wassermenge bewirkt ein Drehmoment um die Verankerung zwischen der Prallbleche und den Ketten. Somit werden die Prallbleche durch die von dem Wasser aufgebrachte Gewichtskraft abgesenkt und das Wasser wird zusammen mit den Prallblechen erst am Wasserauslassende des Schachts wieder abgegeben. Dieses Absenken der Prallbleche führt zu einer Drehung der Umlenkrollen und das Drehmoment wird von den mit dem Generator verbundenen Umlenkrollen auf den Generator übertragen.

Der Schacht dieser bekannten Wasseranlage wird durch mehrere Module gebildet. Das Wasser strömt in den Schacht an dessen Wassereinlassende ein, d.h. an dem oberen Ende des vertikalen Schachts. Die bekannte Wasserkraftanlage weist den Nachteil auf, dass eine große Menge an Wasser stets an das Wassereinlassende zugeführt werden muss, um einen akzeptablen Wirkungsgrad zu erzielen. Dies hat sich in der Praxis insbesondere deshalb als nachteilhaft erwiesen, da naturgemäß an manchen Einsatzorten der Wasserkraftanlage der Wasserpegel bzw. die zugeführte Wassermenge schwankt. Somit ist es mit der bekannten Wasserkraftanlage nicht möglich, einen erwünschten Wirkungsgrad bei beispielsweise niedrigem Wasserstand bzw. kleineren Wassermengen zu erzeugen.

Aus der DE 100 27 107 A1 ist ein leistungsvariabler Generator bekannt, der durch Aufteilung des Läufers entlang einer Hohlwelle in verschiedene Segmente mit unterschiedlichen Spulenwicklungen, auf denen jeweils umlaufend Pakete von Erregerwicklungen angeordnet sind, die Leistungsanpassung verwirklicht. Über variable elektrische Ansteuerung dieser Erregerwicklungen durch den Erregerstrom kann die geometrische Ausdehnung und die Stärke des Magnetfeldes am Läufer geregelt werden.

Ein derartiger Generator weist jedoch den Nachteil auf, dass dessen Herstellung aufgrund der unterschiedlichen Spulenwicklungen des Läufers mit hohem Aufwand verbunden ist.

Aufgabe der vorliegenden Erfindung ist es, die oben genannten Nachteile des Standes der Technik zu überwinden. Insbesondere ist es eine Aufgabe der vorliegenden Erfindung, eine Wasserkraftanlage vorzuschlagen, welche auch bei Schwankungen der Wasserkraftanlage zugeführten Wassermenge eine Gewinnung von Energie bei hohem Wirkungsgrad ermöglicht.

Zur Lösung der obigen Aufgabe wird mit der vorliegenden Erfindung die gattungsbildende Wasserkraftanlage dadurch weitergebildet, dass der Schacht mehrere Wassereinlassöffnungen aufweist, und dass der Generator ein leistungsvariabler Generator ist.

Die Wassereinlassöffnungen dienen dazu, stets den Einlass des zuströmenden Wassers in den Schacht bei variierender Strömungsmenge, d.h. Wasserpegel zu gewährleisten. Hierzu werden die Wassereinlassöffnungen vorzugsweise höhenversetzt zueinander an dem Schacht ausgeformt. Die Wassereinlassöffnungen sind an dem Wassereinlassende des Schachts, d.h. an dem oberen Ende des vertikalen Schachts ausgebildet. Beispielsweise wird eine der Wassereinlassöffnungen durch das obere Ende des Schachts gebildet. Somit strömt das Wasser in den Schacht hinein, wenn es über die Kanten des Schachts an dessen Wassereinlassende fließt. Weitere Wassereinlassöffnungen sind beispielsweise durch Ausformen von einem oder mehreren Löchern in der äußeren Wandung des Schachts gebildet. Somit kann beispielsweise unterhalb des oberen Endes des Schachts an dessen Wassereinlassende ein Loch ausgeformt werden, durch welches das Wasser auch bei niedrigem Wasserpegel fließen kann. D.h. durch welches das Wasser fließt, wenn die zuströmende Wassermenge nicht ausreicht, um über die Kante des Schachts zu steigen. Es können beispielsweise mehrere Löcher nebeneinander in Umfangsrichtung des Schachts und/oder übereinander bzw. untereinander in Längsrichtung des Schachts ausgeformt werden. Es ist ferner möglich, die Wassereinlassöffnungen nur in Form von in der Wandung des Schachts ausgeformte Öffnungen, welche höhenversetzt zueinander sind, auszubilden. Die Löcher bieten insbesondere die Möglichkeit, Wasser schießend in den Schacht einzuleiten, so dass ein zwischen den Längsseiten der Schaufeln und der Innenwand des Schachts verlaufender Schlitz von der Strömung überbrückt wird.

Ein leistungsvariabler Generator gemäß der Erfindung ist in der Lage, seine Ausgangsleistung stufenlos an wechselnden Anforderungen bezüglich der benötigten Ausgangsleistung oder der gelieferten Antriebsenergie anzupassen.

Mit der erfindungsgemäßen Wasserkraftanlage ist somit auch bei Zufluss von wenig Wasser bzw. bei Schwankungen des Wasserpegels ein guter Wirkungsgrad erzielbar.

Vorzugsweise ist mindestens eine Wassereinlassöffnung höhengleich jeweils an gegenüberliegenden Seiten des Schachts ausgeformt. Somit ist vorzugsweise gegenüberliegend von jeder Wassereinlassöffnung eine weitere Wassereinlassöffnung höhengleich ausgeformt. Eine derartige Anordnung der Wassereinlassöffnungen gewährleistet, dass das Wasser gleichförmig bzw. symmetrisch in den Schacht einläuft. Hierdurch wird eine gleichmäßige Beaufschlagung einer in dem Schacht verlaufenden Schaufel verwirklicht. Dies bringt den Vorteil mit sich, dass die bei dem Aufprall des Wassers auf die Schaufel verursachten Momente ausgeglichen werden und somit eine Schwankung der Schaufel vermieden wird. Die Anzahl der höhengleich gegenüberliegenden Wassereinlassöffnungen muss nicht übereinstimmen, dies wird jedoch bevorzugt. Das Wesentliche bei diesem bevorzugten Ausführungsbeispiel der Erfindung ist, dass die gleiche Menge an Wasser gleichförmig durch die gegenüberliegenden höhengleich ausgeformten Wassereinlassöffnungen in den Schacht einströmt.

Gemäß einer bevorzugten Weiterbildung der vorliegenden Erfindung ist wenigstens ein Flächenabschnitt der Wandung des Schachtes an dessen Wassereinlassende nach außen geneigt. Der Flächenabschnitt der Wandung ist nach außen geneigt, um eine Art Trichterfunktion zu erzielen, so dass zum einen der Strömungswiderstand beim Einfließen des Wassers in den Schacht vermindert wird und zum anderen auch beim Zufluss von großen Mengen an Wasser diese im wesentlichen mittig der in den Schacht verlaufenden Schaufeln zuströmen. Der geneigte Flächenabschnitt wird vorzugsweise durch die obere Kante des Schachts an dessen Wassereinlassende gebildet. Hierdurch wird ein gleichförmiger Einlass des Wassers in den Schacht bewerkstelligt und die in dem Schacht verlaufenden Schaufeln werden hierdurch symmetrisch belastet. Unterhalb dieses Flächenabschnitts können weitere, vorzugsweise gleich geneigte Flächenabschnitte vorzugsweise durch an dem Schacht angebrachte Bleche vorgesehen sein, welche die Strömung schräg nach unten durch ein oder mehrere in dem Schacht ausgesparte Einlassöffnungen auf die Schaufeln leiten.

Vorzugsweise ist unterhalb des geneigten Flächenabschnitts wenigstens eine Wassereinlassöffnung ausgeformt. Durch diese in der Wandung des Schachts unterhalb des Flächenabschnitts ausgeformte Öffnung kann auch bei niedrigem Wasserstand, d.h. bei Zufluss von kleineren Mengen an Wasser, der Wassereinlass in den Schacht gewährleistet werden. Vorzugsweise sind mehrere Wassereinlassöffnungen unterhalb des geneigten Flächenabschnitts beabstandet voneinander höhengleich angeordnet. Beispielsweise können diese in einem vorbestimmten Abstand voneinander in Umfangsrichtung des Schachts ausgeformt sein. Die Größe der Durchlassöffnungen und die Anzahl derselben wird unter Berücksichtigung des zu erzielenden Wirkungsgrades und der Schwankung des Wasserpegels bzw. der zuströmenden Wassermenge bestimmt.

Vorzugsweise sind die Schaufeln in dem Schacht parallel zueinander verlaufend angeordnet. Gemäß einer bevorzugten Weiterbildung der Erfindung ist mit jeder Schaufel ein vorbestimmtes Volumen an Wasser aufnehmbar. Somit dienen die Schaufeln nicht nur als eine Prallfläche für das einströmende Wasser, sondem ein bestimmtes Volumen an Wasser wird von den in dem Schacht verlaufenden Schaufeln bis zu einer unteren Umlenkrolle der Wasserkrafteinheit transportiert. Die Schaufeln sind hierzu leicht wannenförmig ausgeformt, so dass das vorbestimmte Volumen unverlierbar in der Schaufel gehalten werden kann. Somit wird gewährleistet, dass die in dem Schacht verlaufenden Schaufeln auch bei einem geringen Wasserstand mit ausreichenden Wassermengen beaufschlagt sind, um eine Absenkung der Schaufel zu bewirken. Vorzugsweise entspricht das vorbestimmte Volumen der Schaufel ungefähr 15% des zwischen zwei in dem Schacht benachbarten Schaufeln eingeschlossene Volumens. Durch eine derartige Wasserspeicherung in der jeweiligen Schaufel wird ein hoher Wirkungsgrad gewährleistet. Das Volumen zwischen zwei in dem Schacht benachbarten Schaufeln wird durch den Raum zwischen der Unterseite einer oberen Schaufel und der inneren Umfangsfläche der darunter verlaufenden unteren Schaufel und der diesen Raum umgebenden Innenwandung des Schachts definiert.

Vorzugsweise sind die in dem Schacht verlaufenden Schaufeln berührungsfrei zu der Innenwandung des Schachts geführt. Hierdurch wird verhindert, dass Schäden an den jeweiligen Schaufeln bzw. an dem Schacht eintreten. Ein weiterer Vorteil dieser bevorzugten Ausführungsform ist, dass die Wartungskosten verringert werden können.

Gemäß einer bevorzugten Weiterbildung der vorliegenden Erfindung umfasst der leistungsvariable Generator eine Regelungseinheit und eine Haupteinheit, wobei die Regelungseinheit elektrisch mit der Haupteinheit gekoppelt ist. Die Regelungseinheit dient dazu, die Leistungsabgabe des Generators zu regeln. Somit ist es mit der Wasserkraftanlage möglich, eine konstante Frequenzabgabe zu erreichen. Vorzugsweise weist die Haupteinheit einen Stator und einen auf einer Welle lagernden Rotor und die Regelungseinheit einen Magnet und einen auf der Welle gelagerten Läufer auf. Die Regelungseinheit erzeugt einen Erregerstrom, welcher zur Regelung der Haupteinheit an diese gesendet wird. Die Erregung der Haupteinheit erzeugt letztendlich eine auf die Welle wirkende Bremsleistung, um eine erwünschte Frequenzzahl zu erhalten bzw. beizubehalten. Vorzugsweise ist der Magnet in Längsrichtung relativ zu dem Läufer verschiebbar, wobei die Überdeckung zwischen dem Magnet und dem Läufer von 0% bis 100% stufenlos einstellbar ist. Mittels dieser relativen Verschiebung des Magneten kann eine erwünschte Frequenz zuverlässig eingestellt werden.

Gemäß eines bevorzugten Ausführungsbeispiels ist an eine Welle ein Getriebe mit wenigstens zwei aufeinander abwälzenden Getrieberädern angeschlossen. Vorzugsweise ist das eine Getrieberad ein Kettenrad und vorzugsweise sind auf der Umfangsfläche des anderen Getrieberades Hülsen drehbar gelagerte und verteilt angeordnet, deren Abstand zueinander derart bemessen ist, dass zwischen benachbarten Hülsen jeweils ein Zahn des Kettenrades in Eingriff bringbar ist. Ein derartiges Getriebe ist aus der DE 201 06 101 U1 bekannt und für eine ausführliche Beschreibung der Wirkungsweise und der Vorteile eines derartigen Getriebes wird auf diesen Stand der Technik verwiesen.

Weitere Einzelheiten, Vorteile und Merkmale der vorliegenden Erfindung ergeben sich aus der nachfolgenden Beschreibung eines Ausführungsbeispiels in Verbindung mit der Zeichnung. In dieser zeigen:
- Figur 1: eine Längsschnittansicht einer Wasserkrafteinheit einer Wasserkraftanlage;
- Figur 2: eine perspektivische Darstellung einer Längsseite eines Schachtmoduls eines Schachtes an dessen Wassereinlassende;
- Figur 3: einen Querschnitt des in Figur 2 gezeigten Flächenabschnitts; und
- Figur 4: einen Querschnitt eines leistungsvariablen Generators der Wasserkraftanlage.

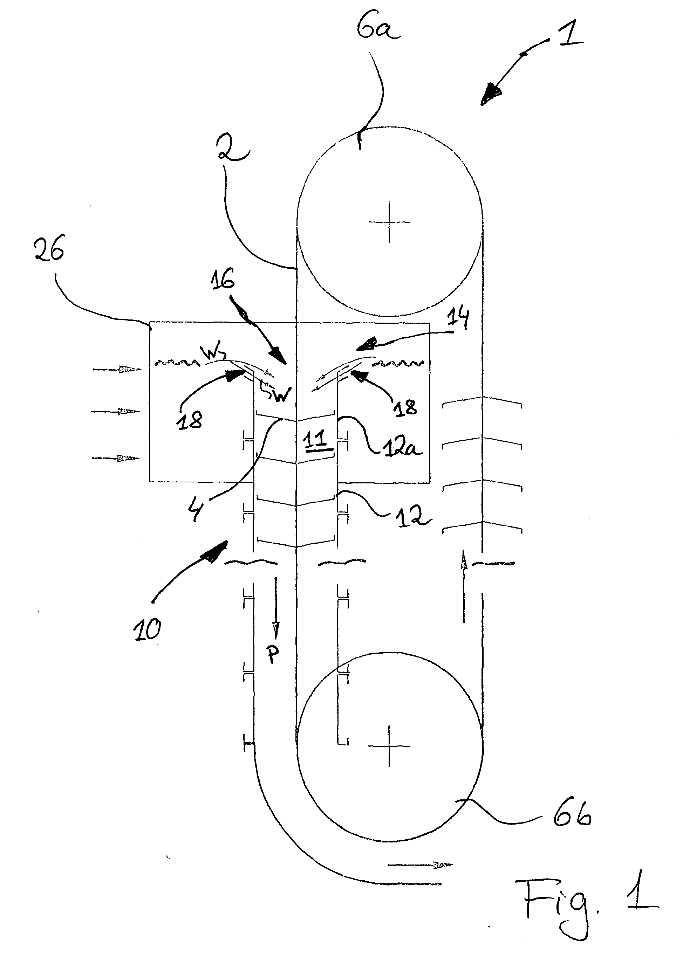

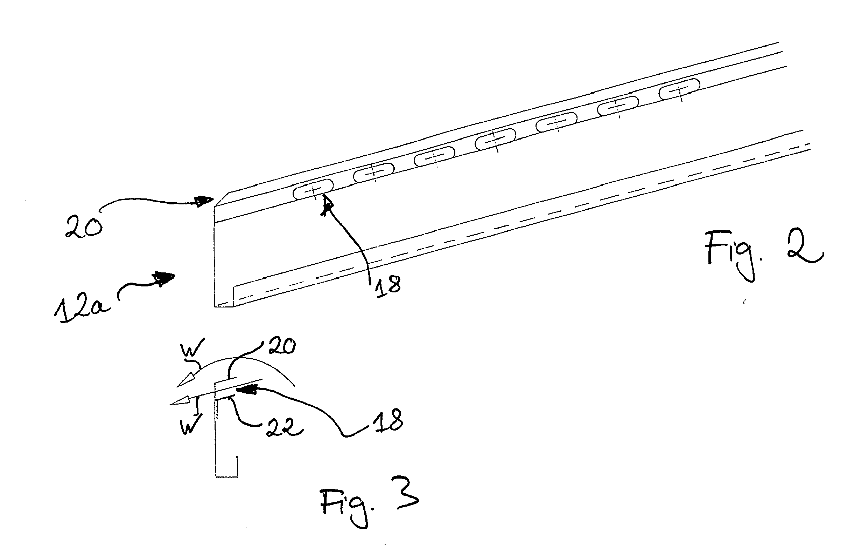

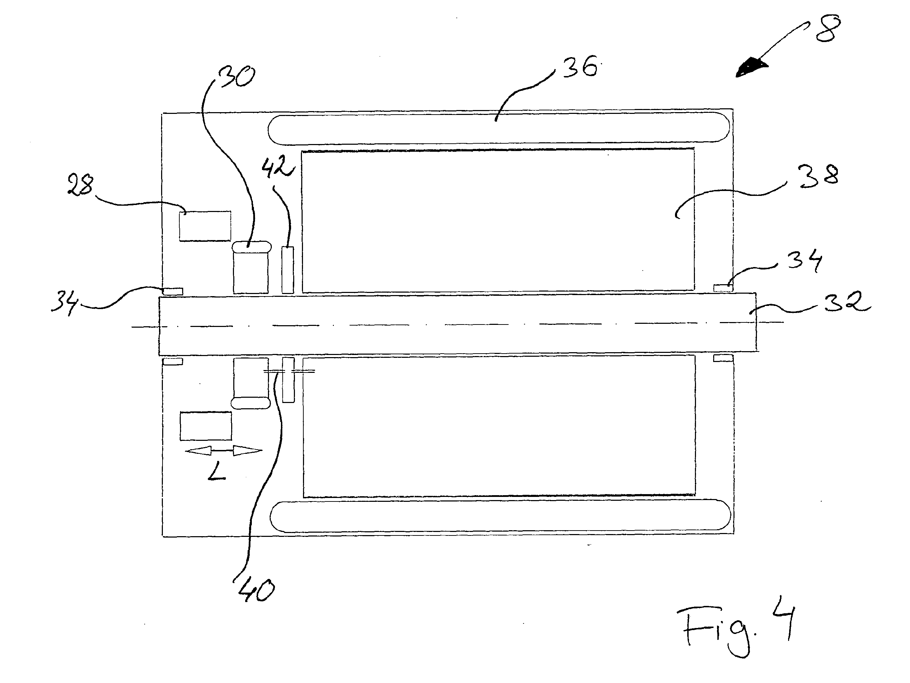

Das in Figur 1 gezeigte Ausführungsbeispiel einer Wasserkrafteinheit 1 einer Wasserkraftanlage umfasst zwei umlaufende Ketten 2, die jeweils mittig an den gegenüberliegenden Enden von Schaufeln 4 befestigt sind. Die Ketten 2 sind ferner über jeweils zwei übereinander angeordnete Umlenkrollen 6 umlaufend geführt. Die Schaufeln 4 sind parallel zueinander verlaufend angeordnet.

Die oberen Umlenkrollen 6a sind verdrehfest auf einer Welle (nicht dargestellt) angeordnet, auf der auch ein Kettenrad (nicht dargestellt) verdrehfest gehalten ist. Dieses ist über eine Antriebskette unter Zwischenschaltung eines Getriebes, insbesondere eines Zykloidentriebstockgetriebes mit einem Generator 8 (vgl. Figur 4) verbunden. Bei einem derartigen Getriebe sind die Zähne eines Zahnrads in Eingriff mit drehbar gelagerten Hülsen. Ein derartiges Getriebe ist in der DE 201 06 101 U1 ausführlich beschrieben.

Dieses Ausführungsbeispiel weist ferner einen Schacht 10, bestehend aus einer Vielzahl von Schachtmodulen 12 auf. Diese Schachtmodule 22 sind an einem nicht dargestellten Gestell befestigt, welches auch die oberen und unteren Umlenkrollen 6a, 6b trägt. Das oberste Modul 12a des Schachts 10 definiert zwei Wassereinlassöffnungen 16 und 18. Die erste Wassereinlassöffnung 16 wird von dem oberen Ende des Schachts 10, d.h. des oberen Randes des Moduls 12a definiert. Die zweiten Wassereinlassöffnungen 18 sind entlang eines Flächenabschnitts der Wandung des Moduls 12a an dessen Wassereinlassende ausgeformt und unterhalb der ersten Wassereinlassöffnung 16 vorgesehen. Statt der in Figur 2 gezeigten höhengleich angeordneten Vielzahl von Öffnungen 18, kann auch eine einzige durchgehende Öffnung vorgesehen sein.

Figur 2 zeigt eine perspektivische Ansicht einer Längsseite des in Figur 1 gezeigten obersten Moduls 12a des Schachts 10. Wie aus der Figur 2 ersichtlich, ist die obere Kante 20 des Moduls 12a nach außen in Bezug auf eine in Richtung des Pfeils P (siehe Fig. 1) verlaufende Längsachse geneigt. Unterhalb dieser geneigten oberen Kante, die dazu dient, dass das Einströmen des Wassers in den Schacht 10 gleichförmig erfolgt, sind mehrere zweite Wassereinlassöffnungen 18 in Umfangsrichtung des Schachts 10 ausgeformt. Diese zweiten Wassereinlassöffnungen 18 sind als längliche Löcher beabstandet voneinander ausgeformt. Wie in Figur 1 gezeigt, kann unterhalb dieser zweiten Wassereinlassöffnungen 18 ebenfalls eine parallel zu der oberen Kante 20 geneigte Fläche 22 ausgeformt werden, um das Wasser gleichförmig durch die Wassereinlassöffnungen 18 einströmen zu lassen (siehe hierzu auch Figur 3). Außerdem wird hierdurch verhindert, dass das Wasser beim Einlass in den Schacht 10 zwischen den Schaufeln 4 und der Innenfläche des Schachts 10 strömt. Die ersten und zweiten Wassereinlassöffnungen 16, 18 gewährleisten den Wassereinlass an jeweils gegenüberliegenden Längsseiten des Schachts 10. Somit wird das Wasser symmetrisch durch gegenüberliegende Wassereinlassöffnungen in den Schacht 10 eingeführt.

Die Wirkungsweise dieses Ausführungsbeispiels wird nachfolgend erläutert.

Wasser 24 wird über einen Kanal 26 zu dem Wassereinlassende 14 des Schachts 10 geführt. Bei großen Wassermengen tritt das Wasser 24 durch die erste Wassereinlassöffnung 16 und den zweiten Wassereinlassöffnungen 18 in den Schacht 10 ein (siehe Pfeil W in Fig. 1 und 3). Hierbei sorgen die obere Kante 20 und die geneigte Fläche 22 in Zusammenhang mit der höhengleichen gegenüberliegenden Anordnung der Wassereinlassöffnungen dafür, dass das in den Schacht 10 einströmende Wasser 24 gleichförmig bzw. symmetrisch auf die Schaufeln 4 auftrifft, wodurch ein Momentausgleich um die Längsachse der Schaufel 4 erfolgt. Somit wird eine Schwankung der Schaufel 4 um ihre Längsachse verhindert und es besteht keine Gefahr, dass die Schaufel 4 die Innenwandung des Schachts 10 berührt, d.h. eine Beschädigung der Schaufel 4 bzw. des Schachts 10 wird hiermit verhindert. Durch das Einführen des Wassers in den Schacht 10 wird die mit Wasser beaufschlagte Schaufel 4 schwerer und wird somit durch die von dem Wasser aufgebrachte Gewichtskraft abgesenkt. Wird die Schaufel 4 nun in Richtung des Pfeils P abgesenkt, füllt sich ein Zwischenraum 11 zwischen der Schaufel 4 und einer darüber parallel angeordneten weiteren Schaufel 4. Die Schaufel 4, die Unterseite einer darüber verlaufenden weiteren Schaufel 4 und die umgebende Wandung des Schachts 10 gewährleisten, dass die Wassermasse im wesentlichen in dem jeweiligen Zwischenraum 11 bleibt. Bei fortschreitender Absenkbewegung in Richtung des Pfeils P gelangt die Schaufel 4 letztendlich zu dem Schachtende, an welchem die Schaufel 4 durch den Umlauf unter die untere Umlenkrollen 6b verschwenkt wird. Dabei wird das in dem Zwischenraum 11 mitgenommene Wasser abgegeben. Eine gewisse Lekageströmung zwischen dem Schacht 10 und den Schaufeln 4 kann nicht vermieden werden, da die Schaufeln 4 berührungsfrei gegenüber dem Schacht 10 gehalten sind.

Das kontrollierte Absenken einer zwischen zwei benachbarten Schaufeln 4 gehaltenen Wassermasse führt zu einer Drehung der Umlenkrollen 6 im Gegenuhrzeigersinn (Fig. 1) und das Drehmoment wird von der oberen Umlenkrolle 6a auf den Generator 8 übertragen.

Wie aus der Figur 1 ersichtlich, hat die Schaufel 4 einen wannenförmigen, in etwa U-förmigen Querschnitt, wodurch die Schaufel 4 in der Lage ist, stets ein vorbestimmtes Wasservolumen unverlierbar aufzunehmen. Das mit der Schaufel aufnehmbare vorbestimmte Volumen entspricht ungefähr 15% des Volumens des Zwischenraums 11. Ferner ist aus dieser Figur erkennbar, dass die Schaufeln 4 die Innenfläche des Schachts 10 nicht berühren. Eine Beschädigung der Innenfläche aufgrund der Schaufeln 4 ist somit ausgeschlossen. Reibkräfte, die den Wirkungsgrad verschlechtern würden, treten nicht zwischen Schacht 10 und Schaufel 4 auf.

Das in Figur 1 gezeigte Ausführungsbeispiel zeigt die Einströmung von großen Wassermengen in den Schacht 10. D.h., bei großen Wassermengen strömt das Wasser durch die Wassereinlassöffnungen 16 und 18 in den Schacht 10 hinein. Sollte die anströmende Wassermenge jedoch nicht ausreichen, um über die obere Kante 20 fließen zu können, gewährleisten die Wassereinlassöffnungen 18 den Betrieb der Wasserkraftanlage. Somit wird auch bei geringeren Wassermengen der Betrieb der Wasserkraftanlage gewährleistet und somit auch die Nutzung von Energie.

Nachfolgend wird in Figur 4 der Aufbau eines leistungsvariablen Generators 8 der in der Wasserkraftanlage gemäß diesem Ausführungsbeispiel benutzt wird, beschrieben.

Der Generator 8 umfasst eine aus einem Magnet 28 und einem Läufer 30 bestehende Regelungseinheit. Der Magnet 28 ist, wie mittels Pfeil L angedeutet, in Längsrichtung relativ zu dem Läufer 30 verschiebbar. Der Läufer 30 ist auf einer Welle 32 drehbar angeordnet, wobei die Welle 32 von der in Figuren 1 bis 3 gezeigten Wasserkrafteinheit 1 angetrieben wird. Die Welle 32 ist mittels Lagerelementen 34 gelagert. Die Haupteinheit des Generators 8 besteht aus einem Stator 36 und einem Rotor 38. Der Rotor 38 trägt impulserregte Elektromagneten und dreht sich in dem örtlich feststehenden Stator 36, in dem sich mehrere Induktionswicklungs- bzw. Spulenpakete befinden. Der Stator 36 weist drei um jeweils 120° versetzt angeordnete Spulenpakete auf. Bezugszeichen 42 kennzeichnet einen Gleichrichter, welcher einen von der Regelungseinheit erzeugten Wechselstrom in einen Gleichstrom umwandelt, bevor dieser über die Leitung 40 in die Haupteinheit eingespeist wird.

Ein Drehzahlmesser zum Kontrollieren der Drehzahl der Welle 32 ist mit der Regelungseinheit gekoppelt. Da bei sich ändernder Antriebslast, die mittels der Wasserkrafteinheit erzeugt wird, die Drehzahl der Welle 32 sich ändern kann, erfolgt eine Regelung der Drehzahl mit Drehzahlmesser zur Erzeugung eines frequenzstabilen Strom durch Veränderung der Erregung der Haupteinheit wie nachstehen wiedergegeben:

Durch Drehung des Rotors 38 ändert sich das Magnetfeld, welches die Induktionswicklungen durchflutet. In den Induktionswicklungen werden die Induktionsspannungen induziert, welche einen sinusförmigen Zeitverlauf aufweisen und um jeweils 120° gegeneinander phasenverschoben sind. Diese Spannung kann dann letztendlich über Anschlüsse abgenommen werden.

Die Elektromagnete des Rotors 38 werden mittels der Regelungseinheit impulserregt. Die Regelungseinheit, welche als ein Außenpolgenerator realisiert ist, liefert diese Impulserregung über die Leitung 40. Der Begriff Außenpolgenerator kennzeichnet das mittels des Läufers 30 Induktionswicklungen auf der Welle 32 angeordnet und in dem Magnetfeld des ortsfest montierten Magneten 28 rotiert wird. Wie bereits vorher erwähnt, ist der Magnet 28 längschieblich verschiebbar und kann somit in unterschiedlichen ortsfesten Positionen positioniert werden. Bei Drehung der Welle 32 wird in dem Läufer 30 ein Strom induziert, welcher über die Leitung 40 und über den Gleichrichter 42 dem Rotor 38 zugeführt wird.

Durch die längsverschiebliche Bewegung des Magneten 28 in Bezug auf den Läufer 30 wird die Erzeugung des frequenzstabilen Stroms kontrolliert. Es wird darauf hingewiesen, dass eine stufenlose axiale Überdeckung zwischen Magnet 28 und Läufer 30 von 0% bis 100% möglich ist.

Mit dem von der Regelungseinheit erzeugten Strom bzw. Erregerstrom kann die Stärke des Magnetfeldes am Rotor 38 geregelt werden. Entsprechend ändert sich dann auch die in der Induktionswicklung des Stators 36 induzierte Spannung. Unter Berücksichtigung dieser Eigenschaft kann eine auf die Welle 32 wirkende Bremsleistung erzeugt werden. Je größer der Erregerstrom ist, desto größer ist auch die Wirkung der Bremsleistung. Somit wird bei Erfassung einer von der Soll-Drehzahl abweichenden Drehzahl der Welle 32 der Erregerstrom derart in die Haupteinheit eingespeist, dass die auf die Welle 32 wirkende Bremsleistung den Erhalt des Stroms mit der erwünschten Frequenz gewährleistet.

### Bezugszeichenliste

- 1: Wasserkrafteinheit
- 2: Ketten
- 4: Schaufeln
- 6a: obere Umlenkrollen
- 6b: untere Umlenkrollen
- 8: Generator
- 10: Schacht
- 11: Zwischenraum
- 12: Schachtmodule
- 14: Wassereinlassende
- 16: erste Wassereinlassöffnung
- 18: zweite Wassereinlassöffnung
- 20: obere Kante
- 22: geneigte Fläche
- 24: Wasser
- 26: Kanal
- 28: Magnet
- 30: Läufer
- 32: Welle
- 34: Lageelemente
- 36: Stator
- 38: Rotor
- 40: Leitung
- 42: Gleichrichter

- P: Pfeil
- L: Bewegung
- W: Wassereinströmung

## Patentansprüche

1. Wasserkraftanlage zur Gewinnung von elektrischer Energie umfassend:
eine einen vertikalen Schacht (10) aufweisende Wasserkrafteinheit (1); und
einen mit der Wasserkrafteinheit (1) verbundenen Generator (8),
**dadurch gekennzeichnet,**
**dass** der Schacht (10) mehrere Wassereinlassöffnungen (16, 18) aufweist; und dass der Generator (8) ein leistungsvariabler Generator ist.

2. Wasserkraftanlage nach Anspruch 1, **dadurch gekennzeichnet, dass** mindestens eine Wassereinlassöffnung höhengleich jeweils an gegenüberliegenden Seiten des Schachts (10) ausgeformt ist.

3. Wasserkraftanlage nach Anspruch 1 oder 2, **dadurch gekennzeichnet, dass** wenigstens ein Flächenabschnitt (20) der Wandung des Schachtes (10) an dessen Wassereinlass-Ende (14) nach außen geneigt ist.

4. Wasserkraftanlage nach Anspruch 3, **dadurch gekennzeichnet, dass** unterhalb des geneigten Flächenabschnitts (20) wenigstens eine Wassereinlassöffnung (18) ausgeformt ist.

5. Wasserkraftanlage nach Anspruch 4, **dadurch gekennzeichnet, dass** mehrere Wassereinlassöffnungen (18) beabstandet voneinander höhengleich angeordnet sind.

6. Wasserkraftanlage nach einem der vorherigen Ansprüche, **dadurch gekennzeichnet, dass** Schaufeln (4) in dem Schacht (10) parallel zueinander verlaufend angeordnet sind.

7. Wasserkraftanlage nach einem der vorherigen Ansprüche, **dadurch gekennzeichnet, dass** in jeder Schaufel (4) ein vorbestimmtes Volumen an Wasser (24) aufnehmbar ist.

8. Wasserkraftanlage nach Anspruch 7, **dadurch gekennzeichnet, dass** das vorbestimmte Volumen der Schaufel (4) ungefähr 15% des zwischen zwei in dem Schacht (10) benachbarten Schaufeln (4) eingeschlossenen Volumens entspricht.

9. Wasserkraftanlage nach einem der vorherigen Ansprüche, **dadurch gekennzeichnet, dass** die in dem Schacht (10) verlaufenden Schaufeln (4) berührungsfrei zu der Innenwandung des Schachts (10) geführt sind.

10. Wasserkraftanlage nach einem der vorherigen Ansprüche, **dadurch gekennzeichnet, dass** der leistungsvariable Generator (8) eine Regelungseinheit und eine Haupteinheit umfasst, wobei die Regelungseinheit elektrisch mit der Haupteinheit gekoppelt ist.

11. Wasserkraftanlage nach Anspruch 10, **dadurch gekennzeichnet, dass** die Haupteinheit einen Stator (36) und einen auf einer Welle (32) lagemden Rotor (38) aufweist, und
dass die Regelungseinheit einen Magnet (28) und einen auf der Welle (32) gelagerten Läufer (30) aufweist.

12. Wasserkraftanlage nach Anspruch 11, **dadurch gekennzeichnet, dass** der Magnet (28) in Längsrichtung relativ zu dem Läufer (30) verschiebbar ist, wobei die Überdeckung zwischen dem Magnet (28) und dem Läufer (30) von 0% bis 100% stufenlos einstellbar ist.

13. Wasserkraftanlage nach einem der vorherigen Ansprüche, **dadurch gekennzeichnet, dass** an eine Welle ein Getriebe mit wenigstens zwei aufeinander abwälzenden Getrieberädern angeschlossen ist.

14. Wasserkraftanlage nach Anspruch 13, **dadurch gekennzeichnet, dass** das eine Getrieberad ein Kettenrad ist und dass auf der Umfangsfläche des anderen Getrieberades drehbar gelagerte Hülsen verteilt angeordnet sind, deren Abstand zueinander derart bemessen ist, dass zwischen benachbarten Hülsen jeweils ein Zahn des Kettenrades in Eingriff bringbar ist.
